# EUROPEAN PATENT SPECIFICATION

(11) **EP 3 874 316 B1**
(45) Date of publication and mention of the grant of the patent: **17.12.2025**
(21) Application number: 18938456.3
(22) Date of filing: 31.10.2018
(51) Int. Cl.: B60T 7/22, G01J 1/04, G01J 1/42, G01J 5/06, G01J 5/0802, G01N 21/31, G01S 7/48, G01S 17/95, G01J 5/00, G01N 21/47

(54) **OPTIMUM SPECTRAL BANDS FOR ACTIVE VISION SYSTEMS**
OPTIMALE SPEKTRALBÄNDER FÜR AKTIVE SICHTSYSTEME
BANDES SPECTRALES OPTIMALES POUR SYSTÈMES DE VISION ACTIVE

(43) Date of publication of application: 08.09.2021
(73) Proprietor: The Regents Of The University Of Michigan, Ann Arbor, MI 48109-2590 (US)
(72) Inventor: RENNÓ, Nilton O., Ann Arbor, Michigan 48109 (US); HUGHES, Keith C., Ann Arbor, Michigan 48109-2590 (US)
(74) Representative: Witte, Weller & Partner Patentanwälte mbB
(86) International application number: PCT/US2018/058524
(87) International publication number: WO 2020/091769

(56) References cited:
- EP-A1- 3 061 077
- EP-B1- 1 317 680
- WO-A1-2019/191016
- CN-A- 104 034 700
- KR-A- 20170 123 498
- US-A- 5 574 286
- US-A1- 2005 167 593
- US-A1- 2011 032 508
- US-A1- 2018 056 854

## Description

### FIELD

The present disclosure relates to active vision systems and to a method for determining optimum spectral bands for active vision systems that operates in one of these optimum spectral bands.

### BACKGROUND AND SUMMARY

This section provides background information related to the present disclosure which is not necessarily prior art. This section provides a general summary of the disclosure, and is not a comprehensive disclosure of its full scope or all of its features.

Typically, vision systems monitor a scene using electromagnetic radiation usually from a specific spectral band, such as ultra violet (UV), visible (VIS), near infrared (NIR), short wave infrared (SWIR), and long wave infrared (LWIR) radiation. Together, the NIR and SWIR spectral bands are also referred to as the reflected infrared band (as opposed to the emitted radiation from the thermal infrared band), while the LWIR band is referred to as the thermal infrared band.

Infrared (IR) vision systems are used in numerous civilian and military applications. Some vision systems are designed to observe scenes under extreme low illumination by using light amplification or light intensification technologies, such as the night vision device described in U.S. Patent No. 4,463,252. Different information about a scene can be conveyed through incoming electromagnetic radiation from the various portions of the spectrum. Indeed, many techniques have been developed by combining multi-spectral images of the scenes of interest. For example, U.S. Patent No. 5,035,472 describes a device that transmits the signal of an image along two separate paths, one directing the signal towards an IR detector and the other directing the signal towards an image intensifier. Then, the IR and intensified images are combined for displaying the information to the user.

The number of autonomous vehicles in use on public roads and in civilian airspace has been increasing steadily, exposing them to hazardous environmental conditions such as slippery roads and aircraft icing conditions. Therefore, autonomous vehicles will likely be required to have control systems configured to receive information regarding not only the surrounding terrain and the obstacles in their path, but also the conditions of the road and the airspace ahead. In addition, autonomous vehicles will likely need to respond to this information automatically by commanding maneuvers to negotiate terrain, avoid obstacles, and track a particular path in order to avoid potentially hazardous conditions.

Recent accidents involving automobiles employing advanced automation systems have been discussed extensively in the engineering communities and in the media. Accidents frequently occur when vision systems fail due to exposure to intense sunlight (e.g. sun glare). This is a common problem for vision systems that rely on cameras, lidars, or other devices operating in portions of the spectrum strongly affected by sunlight, such as in the visible and near infrared spectral bands.

The principles of the present teachings provide a method for avoiding problems caused by sunlight in devices used for avoiding obstacles, navigating, detecting road conditions (i.e. distinguishing dry roads from wet roads and icy roads, estimating the thickness of water layers), and sensing the atmospheric conditions in the airspace around an aircraft or an autonomous air vehicle (i.e. detecting potentially hazardous icing conditions or volcanic ash ahead). In addition, the present teachings can be used in systems for detecting the concentration of gases leaking from industrial systems or natural atmospheric constituents.

The present teachings provide a method for determining optimum spectral bands for active vision systems used outdoor and a device that employs this method. The method and the device can be used to provide warnings to drivers, to provide information for aircraft, automobile, and autonomous air, and ground or sea vehicles, among other applications.

In some embodiments of the present invention, detectors, detector arrays, or multi-spectral cameras can be used to make the required measurements. A similar system can be used for detecting ice or water unambiguously on aircraft surfaces, manufacturing systems, or any other object of interest. In some embodiments, a system using measurements in a single optimum spectral band, such as a lidar, can be used for obstacle avoidance or navigation.

In some embodiments of the present invention, a road condition monitoring system is provided that is configured to detect water, snow, frost, clear ice, and other types of ices on roads and any other surface of interest. The system is configured to distinguish dry surfaces from those covered by water, snow, frost, and various types of ice even when these substances cover only a fraction of the field of view of the road condition monitoring system.

Water and ice can often be difficult to detect by drivers or current synthetic vision systems. Clear ice is unusually difficult to detect. Aircrafts, cars, trucks, buses, motorcycles, and other vehicles would benefit from systems capable of detecting the presence of ice or water on surfaces, such as roadways, bridges, sidewalks, or even runway and taxiways (i.e. in connection with ground operations of aircrafts or supporting personal and vehicles). The fact that drivers, operators, and synthetic vision systems fail to detect deteriorating road conditions ahead of a vehicle because of sun glare frequently leads to accidents.

Some of the prior art approaches for vision systems designed for navigation and for the detection of ice and water on roads, aircraft surfaces, and in the airspace around them are based on near infrared radiance measurements. However, these prior art techniques are subject to the negative effects of sun glare because they are based on measurements in portions of the spectrum strongly affect by sunlight.

U.S. Patent App. Pub. No. 2008/0129541AI refers to a slippery ice warning system capable of monitoring the road ahead of a vehicle. One or two visible cameras are used to image the same scene at two orthogonal polarizations. When a single camera is used, a polarization beam splitter is used to separate the reflected light into two orthogonal polarizations. The possible (but ambiguous) determination of the existence of slippery ice ahead of the vehicle is detected by measuring the polarization of the reflected light. Moreover, since this system operates in the visible portion of the spectrum it is subject to the negative effects of sun glare.

U.S. Patent App. Pub. No. 2005/0167593A1 refers to a method that uses shifts in the wavelength of the reflectance near 1.4 µm to distinguish water from ice. In this method, liquid water and ice are discriminated from each other by analyzing shifts in the short wavelength edge of the 1.4 µm band reflectance. Detection decisions are based on shifts in wavelengths in a portion of the spectrum strongly affected by sunlight. Unfortunately, systems based on this method are subject to problems caused by sun glare.

Document EP3 061 077 A1 relates to a system for detecting ice or supercooled large droplets within an area of interest having a detection system measuring radiance or reflectance of the area of interest when exposed to shortwave infrared radiation having a wavelength in the range of about 2.05 µm to about 2.30 µm. The detection system measures the radiance or reflectance in a first band having a wavelength in the range of about 2.05 µm to about 2.15 µm and outputting a first band signal, and further measures the radiance or reflectance in a second band having a wavelength in the range of about 2.15 µm to about 2.30 µm and outputting a second band signal. A processing unit determines a ratio of the first band signal and the second band signal and compares the ratio to a predetermined critical ratio and outputs a determination signal indicating presence of ice or supercooled water droplets.

WO 2019/191016 A1 is prior art under Article 54(3) EPC, and relates to a road condition monitoring system capable of measuring the radiance reflected by an area of interest or the thermal radiance emitted by an area of interest in wavelengths range containing a crossover point between the curves representing the absorption of electromagnetic radiation by ice and water. A detector configured to measure the radiance in a first band having wavelengths in a spectral band on a first side of the crossover point and output a first band signal, and measure the radiance in a second band having wavelengths in a spectral band on a second opposing side of the crossover point and output a second band signal. A data processing unit configured to determine the ratio of the first band signal to the second band signal and compare the ratio to predetermined critical ratios to output a determination signal indicating the presence of water or various types of ice.

US 2018/056854 A1 relates to an image projection apparatus that can be attached to a vehicle and can be effectively utilized for acquisition of road surface condition information, detection of a hidden vehicle, and the like is provided. The image projection apparatus that projects an image includes: an acquisition unit that acquires information related to a vehicle; an image projection unit that projects an image based on the information acquired by the acquisition unit; and imaging means that acquires an image outside the vehicle, the image projection unit projects light in a wavelength band centered on a wavelength of 1.4 µm, and the imaging means provides the information related to the vehicle by imaging an image projected based on the light in the wavelength band centered on the wavelength of 1.4 µm.

A more recent invention described in U.S. Patent App. Pub. No. 20120193477A1 uses effective reflectance defined as the reflectance of a given material at a given wavelength divided by the reflectance of this same material at a wavelength equal to 1.1 µm to determine the measurements bands for distinguishing wet material from that containing ice on its surface. In this technique, the detection signal is the contrast C between the measurements in the first and the second band, where the contrast signal is defined the ratio between the differences in the intensity of radiation in the second and first bands and the sum of the intensities in the two bands. In this technique, detection decisions are based on the contrast signal is spectral bands strongly affected by sunlight. Unfortunately, systems based on this method are also subject to problems caused by sun glare.

U.S. Patent No. 9,304,081 B2 describes a technique that uses the radiance ratio around a crossover point (γ = R_{λ1}/R_{λ2}) to monitor the condition of the road or the airspace ahead of a land or air vehicle. The key feature of this technique is that the detection signal is robust because if depends simply on the ratio of the measurements in two nearby narrow spectral bands. However, minimization of the effects of sun glare was not a concern when the technique was developed.

It is an object of the present disclosure to provide an active vision system and a detection method using such system, wherein negative effects of sun glare can be reduced.

This object is achieved by an active vision system as defined in claim 1, and by a detection method using such system, as defined in claim 10.

According to the principles of the present teachings, optimum spectral bands are implemented in a system for monitoring potentially hazardous conditions ahead such as water, snow, and ice on roads or runways. The system disclosed herein overcomes the disadvantages of the prior art because it is immune to the negative effects of sun glare. Active vision systems can be designed for navigation and for the detection of potentially hazardous conditions in the airspace or in the surface ahead of a vehicle. Industrial systems for outdoors use can be configured to map the system's surroundings or to distinguish clean surfaces from those covered by ice, snow, oil, water, or other particular substances of interest.

In some embodiments of the present teachings, a light source (i.e. a pulsed laser), multispectral detectors and/or multispectral camera, a data processor unit, and interfaces with displays, safety systems, and/or autonomous systems are employed to provide an indication of the conditions ahead and respond to it.

In some embodiments, the road condition monitoring system of the present teachings contains only a detector pair with filters, a data processor unit, and interfaces to displays and control systems. In some embodiments, a lidar using a laser with wavelengths falling within one of the optimum spectral bands described in this document can be used.

Further areas of applicability will become apparent from the description provided herein. The description and specific examples provided in this summary are for illustration only; they are not intended to limit the scope of the present disclosure.

### DRAWINGS

The drawings described herein are for illustrative purposes only of selected embodiments and not all possible implementations, and are not intended to limit the scope of the present disclosure.
FIG. 1 illustrates the solar irradiation spectrum at the top of the atmosphere and near the surface at sea level. Bands in which solar irradiation is strongly absorbed by atmospheric ozone (O₃), carbon dioxide (CO₂) and water vapor (H₂O) are indicated.
FIG. 2 illustrates the main atmospheric absorption bands. These are the optimum spectral bands for active vision systems because they minimize the negative effects of solar radiation, such as sun glare. The spectral bands in which the fraction of the incident solar radiation passing through the atmosphere are lowest, are the best bands for active vision systems for use outdoors.
FIG. 3 illustrates the absorption spectra of water substance and particularly the complex index of refraction of liquid water and ice indicating possible optimum bands for active vision systems (e.g., at approximately < 0.3, 0.90-0.95, 1.10-1.15, 1.35-1.50, 1.80-2.06, 2.50-3.05 µm as non-exhaustive examples).
FIG. 4 illustrates the index of refraction of liquid water and ice around the 1.98 µm crossover point. This is an optimum spectral band for active road conditions monitoring capable of distinguishing dry roads, from roads covered by ice, snow, slush, or water. It is also an optimum band for active aircraft icing detection systems capable of monitoring the icing potential of clouds ahead.
FIG. 5 illustrates a schematic block diagram illustrating a vision system according to the principles of the present teachings.
FIG. 6 illustrates a road condition assessment matrix relating the detection signal and the road surface temperature with the coefficient of friction between the vehicle's wheels and the road.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer, or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

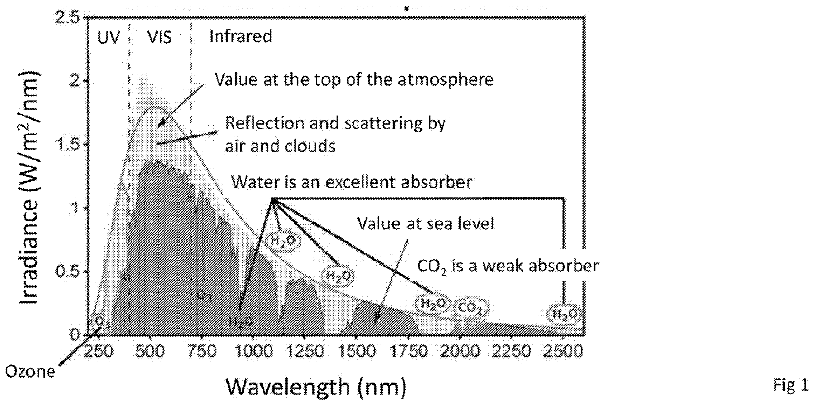

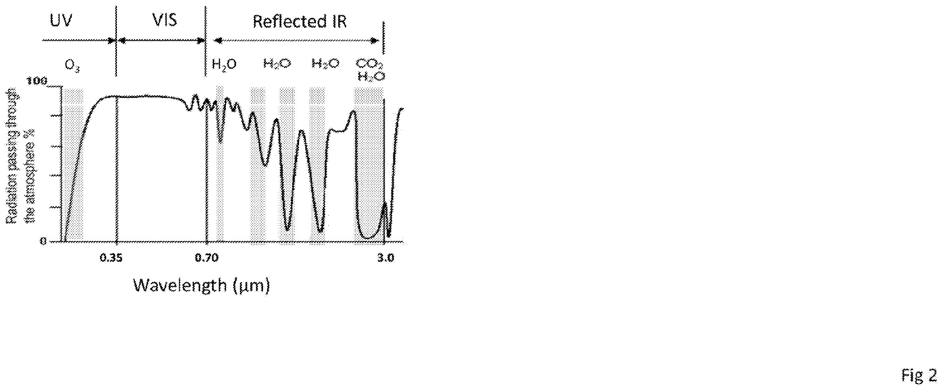

According to the principles of the present teachings, a vision system 10, such as a road condition monitoring system, is provided for detecting road condition and/or for monitoring conditions of interest, such as but not limited to ice detection on aircraft, manufacturing systems, or other objects of interest. The vision system 10 is configured and operable to make measurements in spectral bands in which solar radiation is strongly absorbed by atmospheric constituents (FIGS. 1 and 2), thereby reducing or eliminating the negative effects of sunlight, such as solar glare, on vision system detection. In accordance with the present teachings, the invention will be disclosed in connection with a road condition monitoring system; however, it should be understood that the principles of the present teachings should not be regarded as being limited to only road condition monitoring, but are equally applicable to a wide variety of vision and/or detection systems that are typically negatively influenced by sunlight in any portion of the spectrum or solar glare.

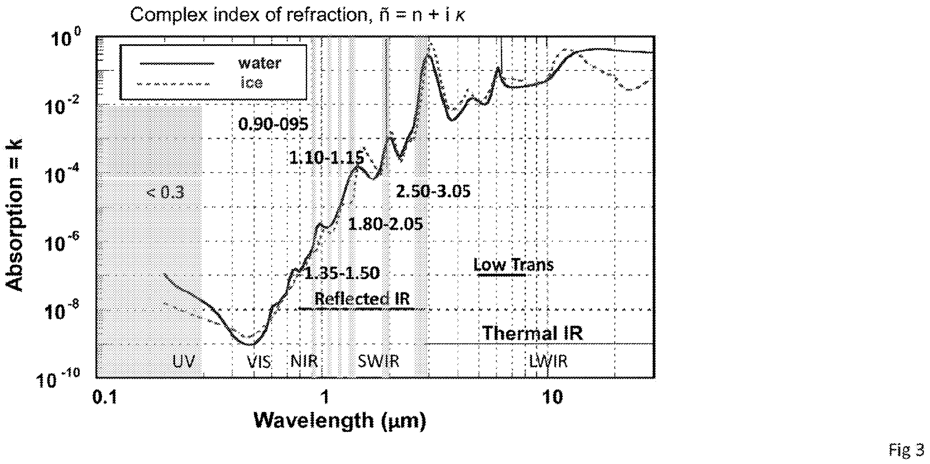

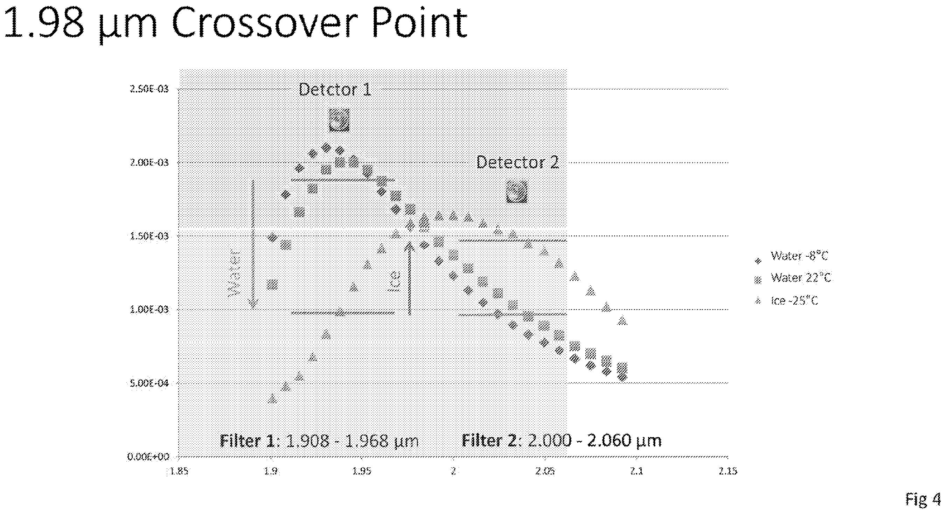

In some embodiments, vision system 10 uses measurements of radiance in at least two narrow spectral bands indicated in FIGS. 3 and 4 to estimate the road condition ahead of the vehicle, for example, at distances in excess of 100 m.

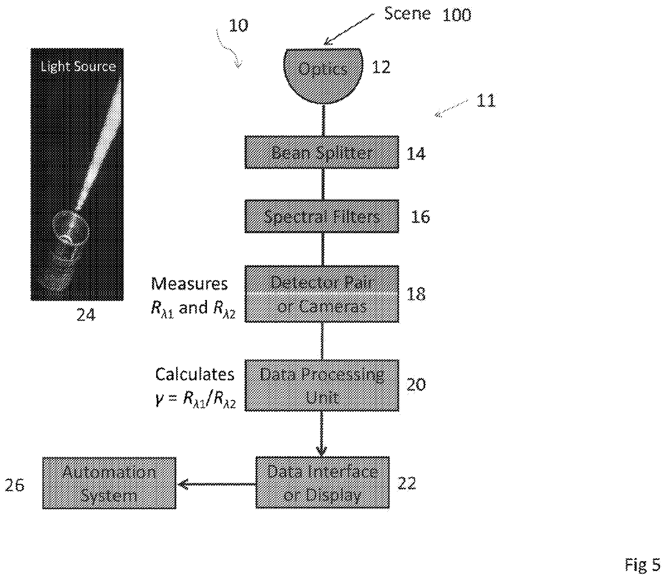

The vision system 10 illustrated in FIG 5 is a vision system configured to detect water, snow, frost, clear ice (also referred to as glaze or black ice), and other types of ices on roads or any other surface of interest. Vision system 10 is configured to distinguish dry surfaces from those covered by water, snow, or other types of ice. In some embodiments, vision system 10 monitors the airspace around or ahead of an aircraft for hazardous icing conditions.

With particular reference to FIG. 5, a schematic block diagram illustrating vision system 10 according to the principles of the present teachings. In some embodiments, vision system 10 comprises an optics system 11 having one or more light collection optics 12, an optional beam splitter 14, an optional bandpass or spectral filters 16, and detector pair or cameras 18. The optics system 11 can detect a scene 100 as an optical input and output a resultant optics signal. The radiance of scene 100 can be measured with cameras 18, such as those based on Indium Gallium Arsenide (InGaAs) technology, or with photodetectors, photodiodes, pyroelectric detectors, thermopile detectors, photoconductors, among others.

The vision system 10 can further comprise, a processing unit 20 configured to receive the optics signal from the optics systems and calculate the ratio of the radiance in the two bands in which solar radiation is reduced substantially due to absorption by atmospheric constituents in order to mitigate the negative effects of solar radiation. The processing system 20 is configured to output a resultant signal in response to the measurements in the spectral bands to a display or data interface system 22, in response to light source 24. In some embodiments, light source 24 comprises halogen lights, incandescent lights, or pulsed infrared lasers, or LEDs used to illuminate the area of interest 100. In some embodiments, the area of interest 100 ahead of the vehicle can be illuminated with intense laser beams 24 containing the desired spectrum.

In some embodiments, vision system 10 can comprise an automation system 26 operably coupled to a system of the vehicle for automatically controlling the system of the vehicle in response to an output signal from the data processing unit 20 or data interface 22.

Radiance measurements (instead of reflectance measurements) are sufficient for most practical applications, because the targets can be illuminated with light sources containing relatively small power variations between the spectral bands of interest (e.g., surfaces illuminated by direct or indirect sunlight, or illuminated by a known light source).

As illustrated in FIG. 4, a crossover point occurs in the imaginary part of the index of refraction of liquid water and ice at a wavelength of 1.98 µm. In this band, careful measurements at each side of the crossover point, like in the two bands indicated in FIG. 4 by short horizontal bars move the detection signal of water in the opposite direction to that of snow and ice. The location and width of the first (detector 1) and second (detector 2) bands are selected such that water causes the first band radiance signal and the second band radiance signal to move in opposite direction than for ice.

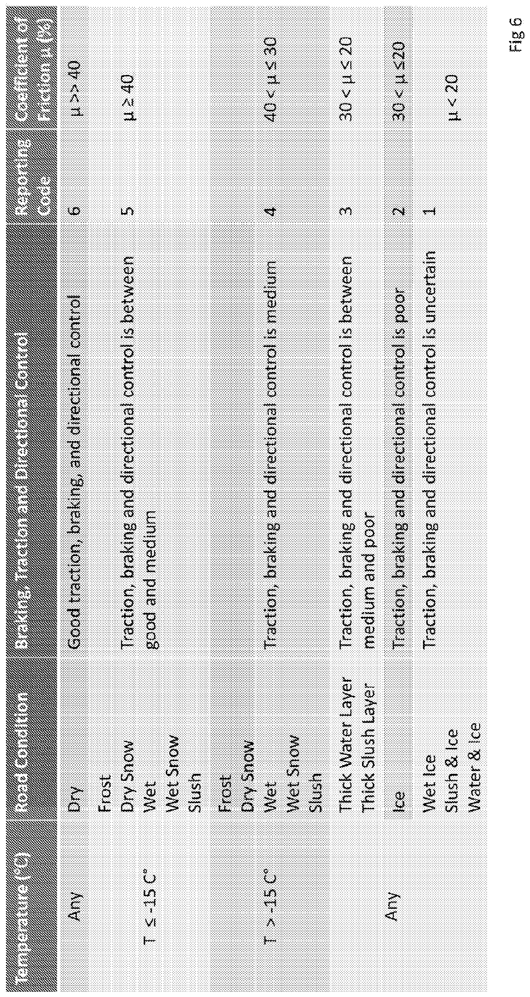

In some embodiments, the present teachings provide a system that alerts the driver or provides feedback to the vehicle's automation systems. The present system is capable of quantifying the hazards level using road condition assessment matrices such as that illustrated in FIG 6. This example is analogous to the runway condition assessment matrix developed by the FAA.

The data processing unit or system 20 according to the claimed invention is configured to implement an algorithm to detect the presence of water, snow, frost, ice and water/ice mixtures using non-transitory software and look-up tables to estimate the surface condition and output a warning or alert when a predetermined condition is detected based on the radiance measurements in the first band and the second band. By way of non-limiting example, the algorithm for assessing road condition ahead of a vehicle can comprise the following steps:
1. Measurements with optical system 11 containing a pair of detectors 18 or a pixel array with spectral filters 16 are used to measure the radiance of the area of interest 100 (e.g. 100 m ahead of the vehicle).
2. Measurements with a spectral filter that allows radiance in a first band between about 1.908 and 1.968 µm to pass are used to determine the radiance at one side of the crossover point (R_{1.938} µm),
3. Measurements with a spectral filter that allows radiance in a second band between about 2.000 and 2.060 µm to pass are used to determine the radiance at the other side of the crossover point (R_{2.030µm});
4. The measurements in the first and second band are then used to determine the radiance ratio γ = R_{1.938µm}/ R_{2.030µm} of the area of interest 100;
5. The value of the radiance ratio γ is used to determine the surface or road condition using a road condition assessment matrix defined below;
6. The surface temperature (T) is estimated using measurements by a thermocouple or any other suitable method;
7. The road surface temperature is then used to refine the surface or road condition using a road condition assessment matrix relating the detection signal and the road surface temperature with the coefficient of friction between the vehicle's wheels and the road; and
8. Feedback is provided to the operator or vehicle automation system. In some embodiments, a WARNING is produced when hazardous conditions are detected. The hazard condition can be quantified by a numerical code.

In summary, a road condition monitoring or vision system immune to the negative effects of sun glare is provided. The vision system is capable of measuring the radiance reflected by an area of interest in wavelengths range containing a crossover point between the curves representing the absorption of electromagnetic radiation by ice and water. The detection system measures the radiance in a first band having wavelengths in a spectral band on a first side of the crossover point and outputting a first band signal, and further measures the radiance in a second band having wavelengths in a spectral band on a second opposing side, of the same crossover point and outputting a second band signal. The crossover point and the measurement bands on each side of the crossover point are selected carefully to avoid the negative effects of solar radiation and to provide unambiguous detection of water, snow and various types of ice even when these substances cover a fraction of the field of view of the road condition monitoring system. A processing unit determines the ratio of the first band signal to the second band signal, and compares the ratio to predetermined critical ratios to output the determination signal indicating the presence of water or various types of ice.

The foregoing description of the embodiments has been provided for purposes of illustration and description. It is not intended to be exhaustive or to limit the disclosure.

## Claims

1. An active vision system (10) for monitoring areas of interest, the vision system comprising:
an illumination source (24) outputting energy to the areas of interest in at least one spectral band in which solar radiation is reduced substantially due to absorption by atmospheric constituents, the at least one spectral band being selected from the group consisting of less than 0.3 µm, 0.90-0.95 µm, 1.10-1.15 µm, 1.35-1.50 µm, 1.80-2.06 µm, and 2.50-3.05 µm;
an optics system (11) receiving an optical input in the at least one spectral band from the areas of interest and outputting an optics signal; and
a processing system (20) receiving the optics signal, the processing system configured to measure the optics signal, the processing system configured to output a resultant signal in response to the measurements in the at least one spectral band,
wherein the optics system (11) comprises at least one detector (18) configured to measure radiance in the at least one spectral band adjacent to a crossover point of the imaginary part of the index of refraction of liquid water and ice, the at least one detector configured to measure the radiance in the first band portion of the at least one spectral band having wavelengths on a first side of the crossover point and output a first band signal, the at least one detector configured to measure the radiance in a second band portion of the at least one spectral band having wavelengths on a second side of the crossover point and output a second band signal, the second side of the crossover point being opposite of the first side; and
the processing system (20) is configured to detect the presence of water, snow, frost, ice, and water/ice mixtures using non-transitory software and look-up tables to estimate the surface condition and output an alert when a predetermined condition is detected based on the radiance measurements in the first band portion and the second band portion.

2. The vision system according to Claim 1 wherein the location and width of the first and second band portions of the at least one spectral band are selected such that water causes the first band signal and the second band signal to move in an opposite direction than ice.

3. The vision system according to Claim 1, wherein the at least one detector (18) comprises a camera and spectral filters (16).

4. The vision system according to Claim 1, wherein the processing system (20) is configured to quantify a hazard level using a road condition assessment matrix relating the detection signal and a measured temperature with the coefficient of friction between a vehicle's wheels and a road surface.

5. The vision system according to Claim 1 comprising: an interface system (22) coupled to a display configured to alert an operator

6. The vision system according to Claim 1 comprising: an automation system (26) of a vehicle configured to respond to the alert from the processing system.

7. The vision system according to Claim 1 comprising: an interface system (22) operably coupled to a vehicle, the interface system configured to prevent unsafe vehicle driving configurations by reducing a vehicle speed or deviating from a hazard in response to the alert.

8. The vision system according to Claim 1, wherein the atmospheric constituents are chosen from the group consistently of atmospheric ozone, O₃, carbon dioxide, CO₂, and water vapor, H₂O.

9. The vision system according to Claim 1, wherein the first band portion is about 1.908 to 1.968 µm and the second band portion is about 2.000 to 2.060 µm.

10. A detection method for detecting an obstacle, a surface, or constituents of interest by using a vision system (10) of any one of claims 1 to 9, the method comprising:
measuring a determination signal in spectral bands in which solar radiation is reduced substantially because of absorption by atmospheric constituents in order to mitigate negative effects of solar radiation such as sun glare.

11. The detection method according to Claim 10 wherein:
radiance is measured in a first band portion and a second band portion adjacent to a crossover point of the imaginary part of the index of refraction of liquid water and
ice and outputting a first band signal and a second band signal respectively, the radiance in the first band portion having wavelengths in a spectral band on a first side of the crossover point and in the second band portion having wavelengths in a spectral band on a second opposing side of the crossover point; and
the ratio of the first band signal to the second band signal is determined and the ratio is compared to predetermined critical ratios to output a determination signal indicating the presence of water or ice.

12. The detection method according to Claim 11 wherein the location and width of the first band portion and the second band portion are adjusted such that water pushes the first band signal and the second band signal in the opposite direction than ice.

13. The detection method according to Claim 10, wherein the spectral bands are about 1.908 to 1.968 µm and about 2.000 to 2.060 µm.

## Patentansprüche

1. Aktives Sichtsystem (10) zum Überwachen von interessierenden Bereichen, wobei das Sichtsystem Folgendes umfasst:
eine Beleuchtungsquelle (24), die Energie an die interessierenden Bereiche in wenigstens einem Spektralband ausgibt, in dem die Sonnenstrahlung aufgrund von Absorption durch atmosphärische Bestandteile wesentlich reduziert ist, wobei das wenigstens eine Spektralband aus der Gruppe ausgewählt ist, die aus weniger als 0,3 µm, 0,90-0,95 µm, 1,10-1,15 µm, 1,35-1,50 µm, 1,80-2,06 µm und 2,50-3,05 µm besteht;
ein optisches System (11), das einen optischen Eingang in dem wenigstens einen Spektralband aus den interessierenden Bereichen empfängt und ein optisches Signal ausgibt; und
ein Verarbeitungssystem (20), das das optische Signal empfängt, wobei das Verarbeitungssystem so konfiguriert ist, dass es das optische Signal misst, und wobei das Verarbeitungssystem so konfiguriert ist, dass es ein Ergebnissignal als Reaktion auf die Messungen in dem wenigstens einen Spektralband ausgibt,
wobei das optische System (11) wenigstens einen Detektor (18) umfasst, der so konfiguriert ist, dass er die Strahlung in dem wenigstens einen Spektralband in der Nähe eines Kreuzungspunkts des Imaginärteils des Brechungsindex von flüssigem Wasser und Eis misst, wobei der wenigstens eine Detektor so konfiguriert ist, dass er die Strahlung in einem ersten Bandabschnitt des wenigstens einen Spektralbandes mit Wellenlängen auf einer ersten Seite des Kreuzungspunkts misst und ein erstes Bandsignal ausgibt, wobei der wenigstens eine Detektor so konfiguriert ist, dass er die Strahlung in einem zweiten Bandabschnitt des wenigstens einen Spektralbandes mit Wellenlängen auf einer zweiten Seite des Kreuzungspunkts misst und ein zweites Bandsignal ausgibt, wobei die zweite Seite des Kreuzungspunkts der ersten Seite gegenüberliegt; und
wobei das Verarbeitungssystem (20) so konfiguriert ist, dass es das Vorhandensein von Wasser, Schnee, Reif, Eis und Wasser-/Eisgemischen unter Verwendung nichtflüchtiger Software und Nachschlagetabellen erkennt, um den Oberflächenzustand zu schätzen und eine Warnung auszugeben, wenn ein vorbestimmter Zustand basierend auf den Strahlungsmessungen in dem ersten Bandabschnitt und dem zweiten Bandabschnitt erkannt wird.

2. Sichtsystem nach Anspruch 1, wobei die Lage und die Breite des ersten und des zweiten Bandabschnitts des wenigstens einen Spektralbandes so gewählt sind, dass Wasser das erste Bandsignal und das zweite Bandsignal in eine entgegengesetzte Richtung als Eis verschiebt.

3. Sichtsystem nach Anspruch 1, wobei der wenigstens eine Detektor (18) eine Kamera und Spektralfilter (16) umfasst.

4. Sichtsystem nach Anspruch 1, wobei das Verarbeitungssystem (20) so konfiguriert ist, dass es ein Gefahrenniveau unter Verwendung einer Straßenbedingungs-Bewertungsmatrix quantifiziert, die das Detektionssignal und eine gemessene Temperatur mit dem Reibungskoeffizienten zwischen Rädern eines Fahrzeugs und einer Straßenoberfläche in Beziehung setzt.

5. Sichtsystem nach Anspruch 1, umfassend:
ein Schnittstellensystem (22), das mit einer Anzeige gekoppelt ist, die so konfiguriert ist, dass sie einen Bediener warnt.

6. Sichtsystem nach Anspruch 1, umfassend:
ein Automatisierungssystem (26) eines Fahrzeugs, das so konfiguriert ist, dass es auf die Warnung des Verarbeitungssystems reagiert.

7. Sichtsystem nach Anspruch 1, umfassend:
ein Schnittstellensystem (22), das funktionsfähig mit einem Fahrzeug gekoppelt ist, wobei das Schnittstellensystem so konfiguriert ist, dass es unsichere Fahrkonfigurationen des Fahrzeugs verhindert, indem es eine Fahrzeuggeschwindigkeit reduziert oder einem Risiko ausweicht, und zwar als Reaktion auf die Warnung.

8. Sichtsystem nach Anspruch 1, wobei die atmosphärischen Bestandteile aus der Gruppe ausgewählt sind, die aus atmosphärischem Ozon, O₃, Kohlendioxid, CO₂ und Wasserdampf, H₂O, besteht.

9. Sichtsystem nach Anspruch 1, wobei der erste Bandabschnitt etwa 1,908 bis 1,968 µm und der zweite Bandabschnitt etwa 2,000 bis 2,060 µm beträgt.

10. Detektionsverfahren zum Erkennen eines Hindernisses, einer Oberfläche oder interessierender Bestandteile, und zwar unter Verwendung eines Sichtsystems (10) nach einem der Ansprüche 1 bis 9, wobei das Verfahren Folgendes umfasst:
Messen eines Bestimmungssignals in Spektralbändern, in denen die Sonnenstrahlung aufgrund von Absorption durch atmosphärische Bestandteile wesentlich reduziert ist, um negative Effekte der Sonnenstrahlung wie Blendung zu mindern.

11. Detektionsverfahren nach Anspruch 10, wobei
Strahlung in einem ersten Bandabschnitt und einem zweiten Bandabschnitt in der Nähe eines Kreuzungspunkts des Imaginärteils des Brechungsindex von flüssigem Wasser und Eis gemessen und jeweils ein erstes Bandsignal bzw. ein zweites Bandsignal ausgegeben werden, wobei die Strahlung in dem ersten Bandabschnitt Wellenlängen in einem Spektralband auf einer ersten Seite des Kreuzungspunkts und in dem zweiten Bandabschnitt Wellenlängen in einem Spektralband auf einer zweiten, gegenüberliegenden Seite des Kreuzungspunkts aufweist; und
das Verhältnis des ersten Bandsignals zu dem zweiten Bandsignal bestimmt wird und das Verhältnis mit vorbestimmten kritischen Verhältnissen verglichen wird, um ein Bestimmungssignal auszugeben, das das Vorhandensein von Wasser oder Eis anzeigt.

12. Detektionsverfahren nach Anspruch 11, wobei die Lage und die Breite des ersten Bandabschnitts und des zweiten Bandabschnitts so angepasst werden, dass Wasser das erste Bandsignal und das zweite Bandsignal in die entgegengesetzte Richtung als Eis verschiebt.

13. Detektionsverfahren nach Anspruch 10, wobei die Spektralbänder etwa 1,908 bis 1,968 µm und etwa 2,000 bis 2,060 µm betragen.

## Revendications

1. Système de vision active (10) permettant de surveiller des zones d'intérêt, le système de vision comprenant :
une source d'éclairage (24) émettant de l'énergie vers les zones d'intérêt dans au moins une bande spectrale dans laquelle le rayonnement solaire est sensiblement réduit en raison de l'absorption par des constituants atmosphériques, l'au moins une bande spectrale étant choisie dans le groupe constitué de moins de 0,3 µm, 0,90 à 0,95 µm, 1,10 à 1,15 µm, 1,35 à 1,50 µm, 1,80 à 2,06 µm, et 2,50 à 3,05 µm ;
un système optique (11) recevant une entrée optique dans l'au moins une bande spectrale provenant des zones d'intérêt et émettant un signal optique ; et
un système de traitement (20) recevant le signal optique, le système de traitement étant configuré pour mesurer le signal optique, le système de traitement étant configuré pour émettre un signal résultant en réponse aux mesures dans l'au moins une bande spectrale,
dans lequel le système optique (11) comprend au moins un détecteur (18) configuré pour mesurer la radiance dans l'au moins une bande spectrale adjacente à un point de croisement de la partie imaginaire de l'indice de réfraction de l'eau liquide et de la glace, l'au moins un détecteur étant configuré pour mesurer la radiance dans la partie de première bande de l'au moins une bande spectrale ayant des longueurs d'onde sur un premier côté du point de croisement et émettre un signal de première bande, l'au moins un détecteur étant configuré pour mesurer la radiance dans une partie de seconde bande de l'au moins une bande spectrale ayant des longueurs d'onde sur un second côté du point de croisement et émettre un signal de seconde bande, le second côté du point de croisement étant opposé au premier côté ; et
le système de traitement (20) est configuré pour détecter la présence d'eau, de neige, de givre, de glace, et de mélanges eau/glace à l'aide d'un logiciel non transitoire et de tables de consultation afin d'estimer l'état de surface et d'émettre une alerte lorsqu'un état prédéterminé est détecté sur la base des mesures de radiance dans la partie de première bande et la partie de seconde bande.

2. Système de vision selon la revendication 1, dans lequel l'emplacement et la largeur des parties de première et seconde bandes de l'au moins une bande spectrale sont choisies de telle sorte que l'eau provoque le déplacement du signal de première bande et du signal de seconde bande dans un sens opposé à celui de la glace.

3. Système de vision selon la revendication 1, dans lequel l'au moins un détecteur (18) comprend une caméra et des filtres spectraux (16).

4. Système de vision selon la revendication 1, dans lequel le système de traitement (20) est configuré pour quantifier un niveau de danger à l'aide d'une matrice d'évaluation d'état de route mettant en relation le signal de détection et une température mesurée avec le coefficient de frottement entre les roues d'un véhicule et une surface de route.

5. Système de vision selon la revendication 1, comprenant :
un système d'interface (22) couplé à un écran configuré pour alerter un opérateur.

6. Système de vision selon la revendication 1, comprenant :
un système d'automatisation (26) d'un véhicule configuré pour répondre à l'alerte du système de traitement.

7. Système de vision selon la revendication 1, comprenant :
un système d'interface (22) couplé de manière opérationnelle à un véhicule, le système d'interface étant configuré pour empêcher des configurations de conduite dangereuses de véhicule en réduisant une vitesse de véhicule ou en s'écartant d'un danger en réponse à l'alerte.

8. Système de vision selon la revendication 1, dans lequel les constituants atmosphériques sont choisis dans le groupe constitué d'ozone atmosphérique, O₃, de dioxyde de carbone, CO₂, et de vapeur d'eau, H₂O.

9. Système de vision selon la revendication 1, dans lequel la partie de première bande est d'environ 1,908 à 1,968 µm et la partie de seconde bande est d'environ 2,000 à 2,060 µm.

10. Procédé de détection permettant de détecter un obstacle, une surface, ou des constituants d'intérêt en utilisant un système de vision (10) selon l'une quelconque des revendications 1 à 9, le procédé comprenant :
la mesure d'un signal de détermination dans des bandes spectrales dans lesquelles le rayonnement solaire est sensiblement réduit en raison de l'absorption par des constituants atmosphériques, de manière à atténuer des effets négatifs du rayonnement solaire tels que l'éblouissement.

11. Procédé de détection selon la revendication 10, dans lequel :
la radiance est mesurée dans une partie de première bande et une partie de seconde bande adjacentes à un point de croisement de la partie imaginaire de l'indice de réfraction de l'eau liquide et de la glace et l'émission d'un signal de première bande et d'un signal de seconde bande respectivement, la radiance dans la partie de première bande ayant des longueurs d'onde dans une bande spectrale sur un premier côté du point de croisement et dans la partie de seconde bande ayant des longueurs d'onde dans une bande spectrale sur un second côté opposé du point de croisement ; et
le rapport entre le signal de première bande et le signal de seconde bande est déterminé et le rapport est comparé à des rapports critiques prédéterminés pour émettre un signal de détermination indiquant la présence d'eau ou de glace.

12. Procédé de détection selon la revendication 11, dans lequel l'emplacement et la largeur de la partie de première bande et de la partie de seconde bande sont ajustés de telle sorte que l'eau pousse le signal de première bande et le signal de seconde bande dans le sens opposé à celui de la glace.

13. Procédé de détection selon la revendication 10, dans lequel les bandes spectrales sont d'environ 1,908 à 1,968 µm et d'environ 2,000 à 2,060 µm.
